# EUROPEAN PATENT SPECIFICATION

(11) **EP 3 705 256 B1**
(45) Date of publication and mention of the grant of the patent: **12.01.2022**
(21) Application number: 20159527.9
(22) Date of filing: 26.02.2020
(51) Int. Cl.: B29C 45/00, F16C 3/03

(54) **METHOD FOR MANUFACTURING SPLINE TELESCOPIC SHAFT AND SPLINE TELESCOPIC SHAFT**
VERFAHREN ZUR HERSTELLUNG EINER TELESKOPISCHEN KEILWELLE UND TELESKOPISCHE KEILWELLE
PROCÉDÉ DE FABRICATION D'UN ARBRE TÉLESCOPIQUE CANNELÉ ET ARBRE TÉLESCOPIQUE CANNELÉ

(30) Priority: 08.03.2019 JP 2019042509
(43) Date of publication of application: 09.09.2020
(73) Proprietor: JTEKT CORPORATION, Osaka-shi, Osaka 542-8502 (JP); KOYO MACHINE INDUSTRIES CO., LTD., Yao-shi, Osaka 581-0091 (JP)
(72) Inventor: TSUJI, Naoki, Osaka-shi, Osaka 542-8502 (JP); KOBAYASHI, Masanori, Osaka-shi, Osaka 542-8502 (JP); TANO, Atsushi, Osaka-shi, Osaka 542-8502 (JP); NEZU, Toshihiro, Yao-shi, Osaka 581-0091 (JP)
(74) Representative: Winter, Brandl - Partnerschaft mbB

(56) References cited:
- DE-B3-102016 203 625
- DE-B3-102016 203 627
- JP-A- 2013 141 957

## Description

### BACKGROUND OF THE INVENTION

### 1. Field of the Invention

The present invention relates to a method for manufacturing a spline telescopic shaft, and to a spline telescopic shaft.

### 2. Description of Related Art

Japanese Unexamined Patent Application Publication No. 2014-238173 (JP 2014-238173 A) discloses a spline telescopic shaft mounted on a vehicle steering system. The spline telescopic shaft is provided by spline-fitting an inner shaft and a tubular outer shaft so that the inner shaft and the outer shaft are slidable along an axial direction and a torque is transmissible therebetween. The outer peripheral surface of the inner shaft is coated with a resin by fluidized-bed coating to provide a resin layer. The resin layer is provided with a spline to be fitted to a spline formed on the inner peripheral surface of the outer shaft. The resin layer may be provided with recesses formed by laser beam machining to use the recesses as lubricant reservoirs. Further prior art DE 10 2016 203625, DE 10 2016 203627 and JP 2013 141957 disclose to overmold toothed portions as well as nonetoothed portion of a telescopic spline.

### SUMMARY OF THE INVENTION

Various metals may be used as materials for forming the inner shaft. Depending on the metals, the strength may decrease due to influence of heat generated during the fluidized bed coating. In view of the circumstances, the resin layer may be formed by injection molding. When the resin layer is formed by injection molding, the resin layer may detach from the inner shaft due to low adhesion to the inner shaft. Even if the recesses serving as lubricant reservoirs are formed in this resin layer by laser beam machining, the resin layer including the recesses may peel off due to the low adhesion. Similar problems may arise in a case where the resin layer is provided on the outer shaft.

The present invention provides a method for manufacturing a spline telescopic shaft, and a spline telescopic shaft in which lubricant reservoirs are easily formed while maintaining retention of a resin layer on an inner shaft or an outer shaft.

A method for manufacturing a spline telescopic shaft according to a first aspect of the present invention is a method for manufacturing a spline telescopic shaft including an inner shaft provided with an external spline on an outer peripheral surface of the inner shaft, and an outer shaft provided with an internal spline on an inner peripheral surface of the outer shaft and configured such that the external spline of the inner shaft slides in an axial direction relative to the internal spline. The method includes a toothless portion forming step, a resin layer forming step, and a cooling step. The toothless portion forming step is a step of forming a toothless portion in one of an external tooth provided on an outer peripheral surface of a shaft body included in the inner shaft to extend in the axial direction and an internal tooth provided on an inner peripheral surface of a tubular body included in the outer shaft to extend in the axial direction. The resin layer forming step is a step of forming a resin layer, which covers one of the external tooth and the internal tooth and fills the toothless portion, by arranging one of the shaft body including the toothless portion and the tubular body including the toothless portion in a mold including a cavity and injecting a resin into the cavity. The cavity is included in a flat receiving surface that faces tooth flanks of one of the external tooth of the shaft body including the toothless portion and the internal tooth of the tubular body including the toothless portion. The cooling step is a step of cooling one of the shaft body including the resin layer and the tubular body including the resin layer to form a lubricant reservoir such that a portion of the resin layer corresponding to the toothless portion is recessed as compared to other portions.

A spline telescopic shaft according to a second aspect of the present invention includes an inner shaft provided with an external spline on an outer peripheral surface of the inner shaft, and an outer shaft provided with an internal spline on an inner peripheral surface of the outer shaft and configured such that the external spline of the inner shaft slides relative to the internal spline. The inner shaft includes a shaft body including an external tooth serving as at least a part of the external spline on the outer peripheral surface. The outer shaft includes a tubular body including an internal tooth serving as at least a part of the internal spline on the inner peripheral surface. One of the shaft body and the tubular body includes a resin layer, which covers one of the external tooth and the internal tooth. A toothless portion filled with the resin layer is provided in one of the external tooth covered with the resin layer and the internal tooth covered with the resin layer. A portion of the resin layer corresponding to the toothless portion is a lubricant reservoir recessed as compared to other portions.

According to the present invention, it is possible to provide the method for manufacturing a spline telescopic shaft, and the spline telescopic shaft in which the lubricant reservoirs are easily formed while maintaining the retention of the resin layer on the inner shaft or the outer shaft.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a schematic structural diagram of a vehicle steering system including an intermediate shaft to which a spline telescopic shaft according to an embodiment is applied;
FIG. 2 is a partially cutaway side view of the intermediate shaft according to the embodiment;
FIG. 3 is a sectional view illustrating the sectional profile of a part of the intermediate shaft according to the embodiment;
FIG. 4 is a perspective view illustrating an inner shaft according to the embodiment;
FIG. 5 is a plan of the inner shaft according to the embodiment that is viewed in an axial direction;
FIG. 6 is a side view illustrating the inner shaft according to the embodiment;
FIG. 7 is a flowchart illustrating a flow of a method for manufacturing the intermediate shaft according to the embodiment;
FIG. 8 is a sectional view illustrating the condition of a shaft body in a resin layer forming step according to the embodiment;
FIG. 9 is a sectional view illustrating a cutting plane including a line IX-IX in FIG. 8, illustrating the condition of the shaft body in the resin layer forming step according to the embodiment;
FIG. 10 is a perspective view illustrating a toothless portion of a shaft body according to Modified Example 1;
FIG. 11 is a sectional view illustrating the toothless portion and its surrounding structure according to Modified Example 1;
FIG. 12 is a perspective view schematically illustrating an inner shaft according to Modified Example 2;
FIG. 13 is a sectional view illustrating the sectional profile of a part of an intermediate shaft according to Modified Example 3; and
FIG. 14 is a sectional view illustrating a cutting plane including a line XIV-XIV in FIG. 13.

### DETAILED DESCRIPTION OF EMBODIMENTS

An embodiment is described below in detail with reference to the drawings. The embodiment described below demonstrates a comprehensive or specific example. Numerical values, shapes, materials, constituent elements, arrangement positions and connection forms of the constituent elements, and the like described in the following embodiment are examples, and are not intended to limit the present invention. Among the constituent elements of the following embodiment, constituent elements that are not described in independent claims that demonstrate the broadest concept are described as optional constituent elements.

The drawings are schematic drawings in which elements are emphasized, omitted, or adjusted in their proportions as appropriate to demonstrate the present invention. Shapes, positional relationships, or proportions may differ from actual shapes, positional relationships, or proportions.

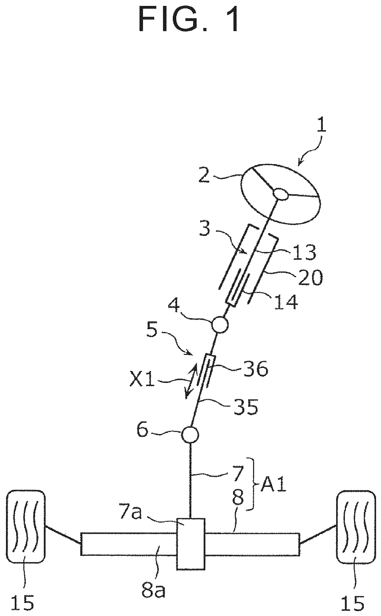

FIG. 1 is a schematic structural diagram of a vehicle steering system including an intermediate shaft to which a spline telescopic shaft according to the embodiment is applied. As illustrated in FIG. 1, a vehicle steering system 1 includes a steering shaft 3, an intermediate shaft 5, a pinion shaft 7, and a rack shaft 8. The steering shaft 3 is coupled to a steering member 2 such as a steering wheel. The intermediate shaft 5 serves as the spline telescopic shaft coupled to the steering shaft 3 through a universal joint 4. The pinion shaft 7 is coupled to the intermediate shaft 5 through a universal joint 6. The rack shaft 8 serves as a steering operation shaft including a rack 8a that meshes with a pinion 7a provided near the end of the pinion shaft 7.

A steering operation mechanism A1 is constructed of a rack and pinion mechanism including the pinion shaft 7 and the rack shaft 8. The rack shaft 8 is supported by a housing (not illustrated) so as to be movable in an axial direction along a lateral direction of a vehicle (direction along the drawing sheet). Although illustration is omitted, the ends of the rack shaft 8 are coupled to corresponding steered wheels through corresponding tie rods and corresponding knuckle arms.

The steering shaft 3 includes an upper shaft 13 and a lower shaft 14 fitted together by spline coupling so as to be rotatable together and slidable relative to each other in an axial direction. One of the upper shaft 13 and the lower shaft 14 is an inner shaft, and the other is a tubular outer shaft. The upper shaft 13 and the lower shaft 14 are supported on a vehicle body through a steering column 20.

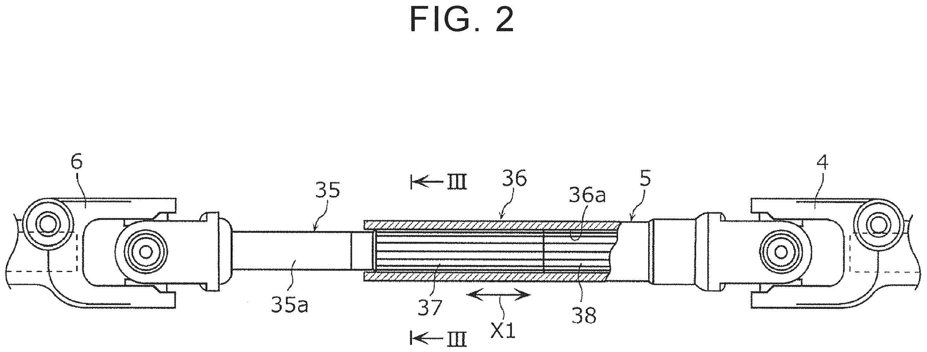

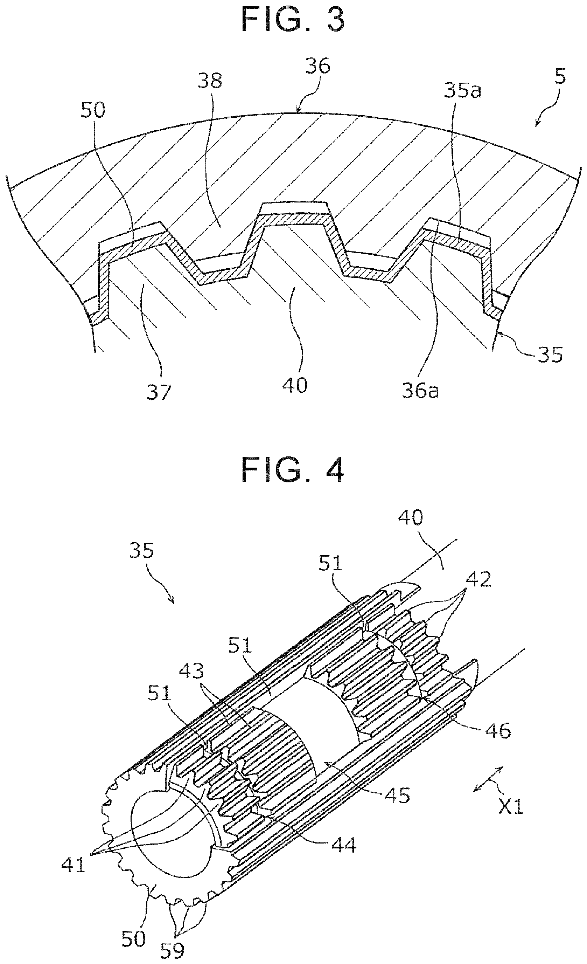

FIG. 2 is a partially cutaway side view of the intermediate shaft 5 according to the embodiment. FIG. 3 is a sectional view illustrating the sectional profile of a part of the intermediate shaft 5 according to the embodiment. Specifically, FIG. 3 is a sectional view illustrating a cutting plane including a line III-III in FIG. 2.

As illustrated in FIG. 1 to FIG. 3, the intermediate shaft 5 serving as the spline telescopic shaft is formed by spline-fitting an inner shaft 35 and a tubular outer shaft 36 so that the inner shaft 35 and the outer shaft 36 are slidable along an axial direction X1 and a torque is transmissible therebetween. One of the inner shaft 35 and the outer shaft 36 is an upper shaft, and the other is a lower shaft. In this embodiment, the outer shaft 36 is coupled to the universal joint 4 as the upper shaft, and the inner shaft 35 is coupled to the universal joint 6 as the lower shaft.

In this embodiment, description is given of a case where the spline telescopic shaft is applied to the intermediate shaft 5. The spline telescopic shaft of the present invention may be applied to the steering shaft 3, and the steering shaft 3 may exert a telescopic adjustment function and a shock absorbing function. In this embodiment, description is given of a case where the vehicle steering system 1 is a manual steering system. The spline telescopic shaft of the present invention may be applied to an electric or hydraulic power steering system.

An outer peripheral surface 35a of the inner shaft 35 is provided with an external spline 37. An inner peripheral surface 36a of the outer shaft 36 is provided with an internal spline 38. The external spline 37 and the internal spline 38 are slidable while being fitted together. The inner shaft 35 and the outer shaft 36 move relative to each other, such that the entire intermediate shaft 5 extends or contracts.

Next, the inner shaft 35 is described in detail.

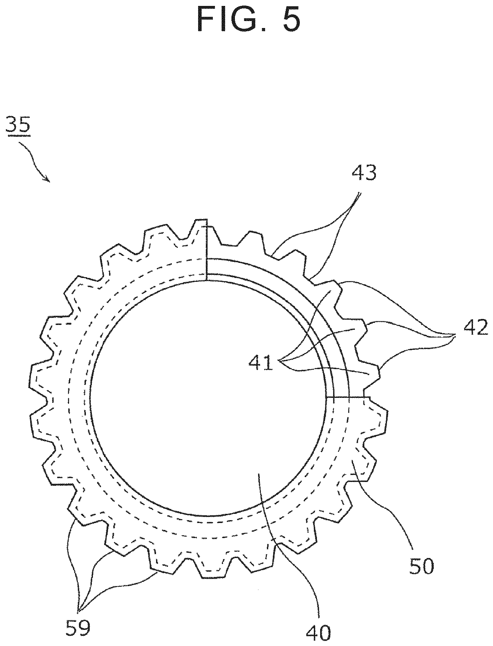

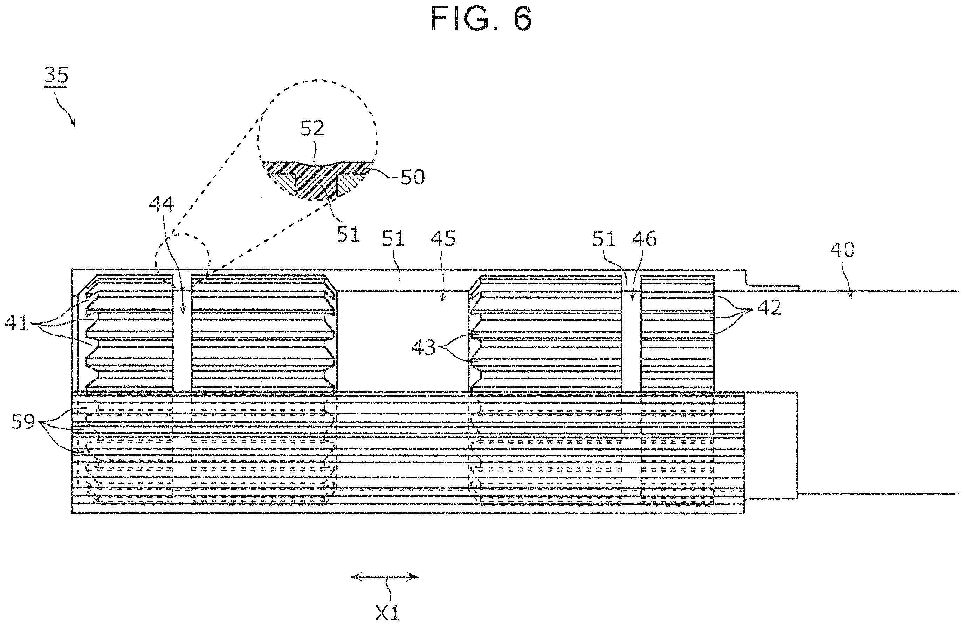

FIG. 4 is a perspective view illustrating the inner shaft 35 according to the embodiment. FIG. 5 is a plan view of the inner shaft 35 according to the embodiment that is viewed in the axial direction. FIG. 6 is a side view illustrating the inner shaft 35 according to the embodiment. In FIG. 4 to FIG. 6, a resin layer 50 provided on the inner shaft 35 is partially omitted. In actuality, the resin layer 50 continuously covers the outer peripheral surface of a shaft body 40 so as to cover the entire circumference of the shaft body 40.

As illustrated in FIG. 4 to FIG. 6, the inner shaft 35 includes the shaft body 40 and the resin layer 50. The shaft body 40 is an elongated member extending along the axial direction X1. The shaft body 40 is made of a metal that is relatively light in terms of specific gravity. Specifically, the shaft body 40 is integrally formed by using aluminum or an aluminum alloy. A plurality of external teeth 41 are provided on the outer peripheral surface of one end of the shaft body 40. The external teeth 41 are radially provided about an axis center of the shaft body 40. The number of external teeth 41 to be provided in a circumferential direction may be two or more, but may be four or more from the viewpoint of achieving stable torque transmission.

The external teeth 41 extend along the axial direction X1. Thus, a plurality of tooth spaces 43 each provided between the external teeth 41 in the circumferential direction also extend along the axial direction X1.

A plurality of toothless portions 44, 45, and 46 are provided in tip surfaces 42 of the external teeth 41. The toothless portion 44 is arranged closest to the distal end of the shaft body 40. The toothless portion 46 is arranged closest to the other end of the shaft body 40. The toothless portion 45 is arranged between the toothless portion 44 and the toothless portion 46. The lengths of the toothless portion 44 and the toothless portion 46 in the axial direction X1 are equal. The length of the toothless portion 45 in the axial direction X1 is larger than the length of the toothless portion 44 in the axial direction X1. The toothless portions 44, 45, and 46 are formed by cutting the external teeth 41 in a range from the tip surfaces 42 of the external teeth 41 to the bottom lands of the tooth spaces 43. That is, the bottom surfaces of the toothless portions 44, 45, and 46 are flush with the bottom lands of the tooth spaces 43.

The toothless portions 44 of the external teeth 41 are arrayed in line over the entire circumference of the shaft body 40. The toothless portions 45 of the external teeth 41 are arrayed in line over the entire circumference of the shaft body 40 at positions different from those of the toothless portions 44 in the axial direction X1. The toothless portions 46 of the external teeth 41 are arrayed in line over the entire circumference of the shaft body 40 at positions different from those of the toothless portions 44 and the toothless portions 45 in the axial direction X1.

The resin layer 50 is laminated on the external teeth 41 and the tooth spaces 43 at a substantially uniform thickness. The tip end faces of the resin layer 50 corresponding to the external teeth 41 are referred to as tip surfaces 59. The resin layer 50 fills the toothless portions 44, 45, and 46 provided in the external teeth 41. With the resin layer 50, the outer profile of the entire external spline 37 is substantially uniform along the axial direction X1. That is, each tip surface 59 of the resin layer 50 has a uniform profile along the axial direction X1. Portions of the resin layer 50 that fill the toothless portions 44, 45, and 46 are referred to as filling portions 51. The thickness of the filling portion 51 is larger than those of portions of the resin layer 50 that are laminated on the external teeth 41 and the tooth spaces 43. Since the filling portions 51 fill the toothless portions 44, 45, and 46, the filling portions 51 are caught on the external teeth 41 in the toothless portions 44, 45, and 46 even if the resin layer 50 may move in the axial direction X1 relative to the shaft body 40. Thus, the movement of the resin layer 50 in the axial direction X1 is restricted, and the resin layer 50 is unlikely to detach from the shaft body 40.

As illustrated in FIG. 6, the outer surfaces of the filling portions 51 are provided with lubricant reservoirs 52 recessed as compared to other portions. Specifically, the lubricant reservoirs 52 are provided at positions corresponding to those of the toothless portions 44, 45, and 46. That is, the lubricant reservoirs 52 are arrayed in a plurality of lines corresponding to the toothless portions 44, 45, and 46 over the entire circumference of the shaft body 40. Thus, the lubricant reservoirs 52 are successively provided in the tooth flanks of the external spline 37. For example, a lubricant is stored in the lubricant reservoir 52. The stored lubricant can increase the slidability of the internal spline 38 relative to the external spline 37. The lubricant includes a liquid lubricant such as lubricating oil, a semisolid lubricant such as grease, and a solid lubricant composed of a soft metal such as molybdenum disulfide.

As illustrated in FIG. 3, the tooth flanks of the external spline 37 mesh with the tooth flanks of the internal spline 38. The slidability of the internal spline 38 relative to the external spline 37 can be increased if the lubricant enters the meshing portions. As described above, the lubricant reservoirs 52 are successively provided in the tooth flanks of the external spline 37. Therefore, the lubricant can enter the meshing portions.

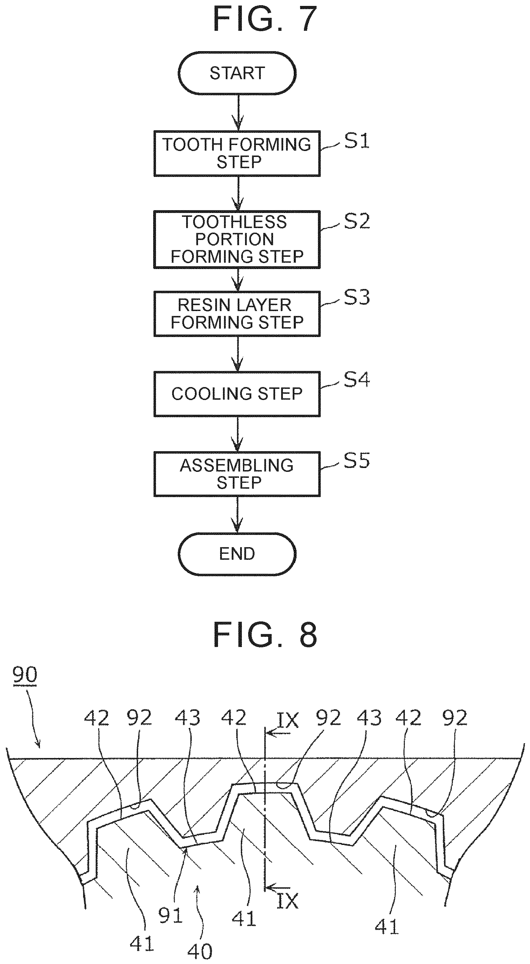

Next, description is given of a method for manufacturing the intermediate shaft 5 serving as the spline telescopic shaft. FIG. 7 is a flowchart illustrating a flow of the method for manufacturing the intermediate shaft 5 according to the embodiment.

In a tooth forming step S1, the shaft body 40 is formed by forming the external teeth 41 on a metal round bar as illustrated in FIG. 5. Specifically, the external teeth 41 are formed on the outer peripheral surface of the round bar by drawing the round bar.

In a toothless portion forming step S2, the toothless portions 44, 45, and 46 are formed by, for example, cutting the tip surfaces 42 of the external teeth 41 of the shaft body 40 formed in the tooth forming step.

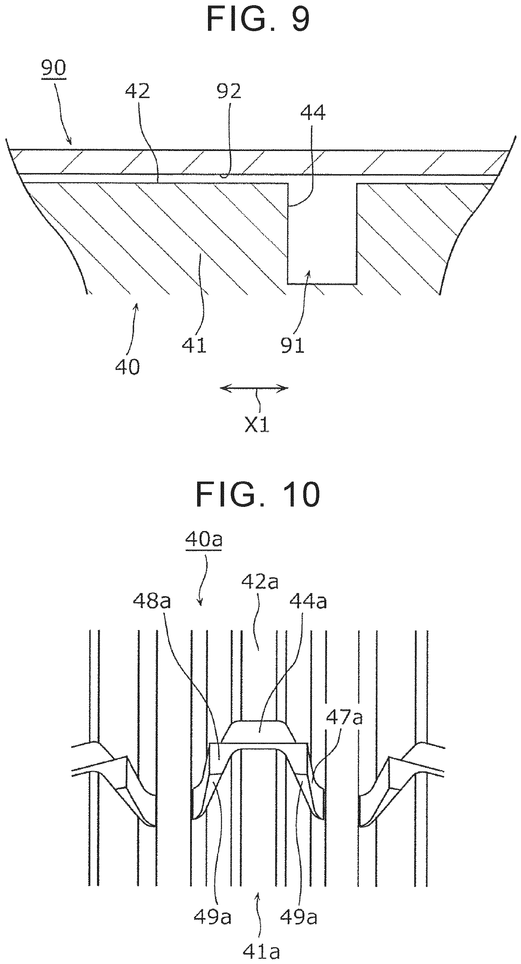

In a resin layer forming step S3, the resin layer 50 is formed by injection molding of the shaft body 40 using a resin. FIG. 8 and FIG. 9 are sectional views illustrating the condition of the shaft body 40 in the resin layer forming step S3 according to the embodiment. FIG. 9 is a sectional view illustrating a cutting plane including a line IX-IX in FIG. 8. As illustrated in FIG. 8 and FIG. 9, in the resin layer forming step S3, one end of the shaft body 40 is housed in a cavity 91 of a mold 90. The cavity 91 of the mold 90 has a surface profile conforming to the outer profile of the resin layer 50. In the cavity 91, each receiving surface 92 for the tip surface 42 of the shaft body 40 has a flat profile.

The receiving surface 92 faces the tip surface 42 at a predetermined distance. The receiving surface 92 is a surface for molding the tip surface 59 of the resin layer 50. The receiving surface 92 has a uniform profile along the axial direction X1. For example, if the tip surface 59 of the resin layer 50 has a linear profile when viewed in the axial direction, the receiving surface 92 also has a linear profile when viewed in the axial direction. The profile is uniform along the axial direction X1. If the tip surface 59 of the resin layer 50 has a curved profile when viewed in the axial direction, the receiving surface 92 also has a curved profile when viewed in the axial direction. The profile is uniform along the axial direction X1. That is, the flat profile of the receiving surface 92 means that the entire receiving surface 92 has a uniform profile along the axial direction X1.

In the resin layer forming step S3, when one end of the shaft body 40 is arranged in the cavity 91 of the mold 90, the resin is injected into the cavity 91 for injection molding. Thus, the resin layer 50 that covers the external teeth 41 and the tooth spaces 43 is formed. At this time, the filling portions 51 are formed by filling the toothless portions 44, 45, and 46 with the resin.

In a cooling step S4 illustrated in FIG. 7, the shaft body 40 including the resin layer 50 is cooled. The shaft body 40 may be cooled in still air or by using a cooler. The resin layer 50 is cured by the cooling. The resin layer 50 shrinks during the cooling. The thickness of the filling portion 51 of the resin layer 50 is larger than those of portions of the resin layer 50 that are laminated on the external teeth 41. That is, the shrinkage of the filling portion 51 is larger than those of the portions laminated on the external teeth 41. Therefore, the outer surface of the filling portion 51 is recessed as compared to the surrounding portions. The recess serves as the lubricant reservoir 52 (see FIG. 6). When the resin layer 50 is cured, the shaft body 40 is released from the mold 90. The shaft body 40 including the resin layer 50 serves as the inner shaft 35 including the external spline 37.

In an assembling step S5, the inner shaft 35 is attached to the outer shaft 36 including the internal spline 38 provided on the inner peripheral surface. Specifically, lubricating oil is applied to at least one of the outer surface of the external spline 37 and the inner surface of the internal spline 38. Then, the inner shaft 35 is attached to the outer shaft 36 by inserting and fitting the external spline 37 of the inner shaft 35 into the internal spline 38 of the outer shaft 36. After the attachment, the lubricating oil is located between the external spline 37 and the internal spline 38. In particular, the lubricating oil is stored in the lubricant reservoirs 52 of the external spline 37. Therefore, the relative slidability between the external spline 37 and the internal spline 38 can be maintained stably over a long period. Thus, the intermediate shaft 5 is completed.

As described above, a part of the resin layer 50 formed by injection molding fills the toothless portions 44, 45, and 46 provided in the external teeth 41 of the shaft body 40. Since the filling portions 51 of the resin layer 50 fill the toothless portions 44, 45, and 46, the filling portions 51 are caught on the external teeth 41 in the toothless portions 44, 45, and 46 even if the resin layer 50 may move in the axial direction X1 relative to the shaft body 40. Thus, the movement of the resin layer 50 in the axial direction X1 is restricted. Accordingly, retention on the shaft body 40 can be maintained even in the case of the resin layer 50 formed by injection molding.

From the viewpoint of manufacture, portions of the resin layer 50 corresponding to the toothless portions 44, 45, and 46 (outer surfaces of the filling portions 51) are recessed as compared to other portions when cured. The recesses serve as the lubricant reservoirs 52. That is, the lubricant reservoirs 52 can definitely be formed during the curing without cutting or melting the resin layer 50. Therefore, the lubricant reservoirs 52 can be formed without performing additional work (machining).

The lubricant reservoirs may be formed such that protrusions for forming the lubricant reservoirs be provided in the cavity of the mold. In this case, the protrusions are obstacles that make it difficult to pull out the shaft body from the mold in the axial direction after the resin layer is cured. Therefore, it is necessary to prepare the mold so that the mold is splittable into many parts. This case is not preferable because the mold is complicated. This embodiment is advantageous in that the lubricant reservoirs 52 can be formed without providing the protrusions for the lubricant reservoirs in the cavity of the mold.

The shaft body 40 is made of aluminum or an aluminum alloy.

Aluminum or an aluminum alloy is light in weight. By employing aluminum or an aluminum alloy for the shaft body 40, the weight of the spline telescopic shaft can be reduced. However, the melting point of aluminum or an aluminum alloy is relatively low. If aluminum or an aluminum alloy is employed for the shaft body 40 and the resin layer is laminated by fluidized-bed coating, the strength is likely to decrease due to influence of heat generated during the fluidized-bed coating. With the method for manufacturing the spline telescopic shaft and with the spline telescopic shaft, the decrease in the strength of the shaft body 40 made of aluminum or an aluminum alloy can be suppressed because the resin layer 50 is formed by injection molding.

The toothless portions 44, 45, and 46 are provided in all the tip surfaces 42 of the external teeth 41 so as to be arrayed over the entire circumference of the shaft body 40. The lubricant reservoirs 52 are provided at portions of the resin layer 50 corresponding to all the toothless portions 44, 45, and 46.

Since the lubricant reservoirs 52 are provided at portions corresponding to all the toothless portions 44, 45, and 46 arrayed over the entire circumference of the shaft body 40, the lubricating oil stored in the lubricant reservoirs 52 can be distributed over the entire circumference of the shaft body 40. Thus, the relative slidability between the external spline 37 and the internal spline 38 can further be stabilized.

The toothless portions 44, 45, and 46 are provided in all the tip surfaces 42 of the external teeth 41 at a plurality of positions spaced away from each other in the axial direction X1 of the shaft body 40 so as to be arrayed over the entire circumference of the shaft body 40.

Since the lubricant reservoirs 52 are provided at portions corresponding to all the toothless portions 44, 45, and 46 arrayed in a plurality of lines over the entire circumference of the shaft body 40, the lubricating oil can be retained at a plurality of positions in the axial direction X1. Thus, the relative slidability between the external spline 37 and the internal spline 38 can further be stabilized.

### Modified Example 1

In the embodiment described above, description is given of the exemplary case where the toothless portions 44, 45, and 46 are formed by cutting. Any method may be employed as the method for forming the toothless portions. In Modified Example 1, description is given of a case where the toothless portions are formed by pressing. In the following description, the same parts as those of the embodiment described above may be represented by the same reference symbols to omit their description.

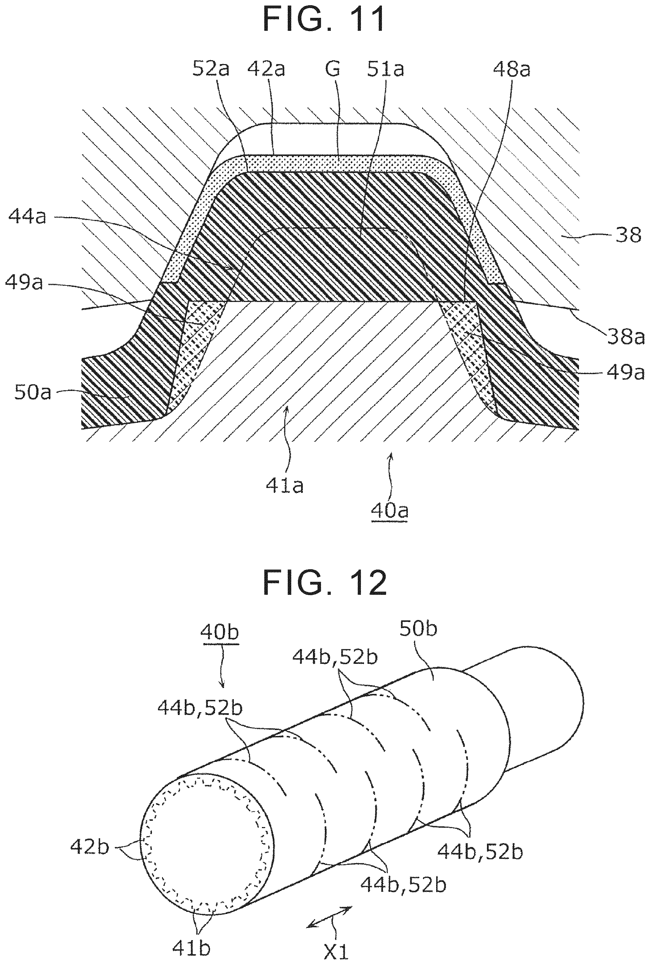

FIG. 10 is a perspective view illustrating a toothless portion 44a of a shaft body 40a according to Modified Example 1. FIG. 11 is a sectional view illustrating the toothless portion 44a and its surrounding structure according to Modified Example 1.

As illustrated in FIG. 10 and FIG. 11, the toothless portion 44a provided in the shaft body 40a according to Modified Example 1 is formed by pressing each external tooth 41a. Therefore, a part of the external tooth 41a is plastically deformed. Thus, a bottom 47a of the toothless portion 44a laterally protrudes from the tooth flanks of the external tooth 41a. Those portions are referred to as protruding portions 49a. In Modified Example 1, description is given of an exemplary case where the protruding portions 49a protrude from the respective tooth flanks of the external tooth 41a. The protruding portion 49a may protrude from one tooth flank alone. The protrusion amount of the protruding portion 49a is smaller than the thickness of a resin layer 50a. Thus, the entire protruding portion 49a is embedded in the resin layer 50a.

FIG. 11 illustrates a state in which the external tooth 41a meshes with the internal spline 38. A long dashed double-short dashed line in FIG. 11 represents the outer profile of the external tooth 41a at a portion that is not pressed. At this portion, the resin layer 50a is evenly laminated. The resin layer 50a overlaps the protruding portions 49a when viewed in the axial direction (portions represented by dashed-line hatching in FIG. 11). Thus, the resin layer 50a is caught on the protruding portions 49a, and the movement of the resin layer 50a in the axial direction X1 is restricted.

A lubricant reservoir 52a recessed as compared to other portions is formed at a portion of the resin layer 50a (filling portion 51a) corresponding to the toothless portion 44a. In FIG. 11, dot hatching represents a state in which lubricating oil G is stored in the lubricant reservoir 52a. Although illustration is omitted in FIG. 11, lubricating oil is also applied to the surface of the resin layer 50a and the surface of the internal spline 38 in actuality.

As illustrated in FIG. 11, the position of a bottom surface 48a of the bottom 47a may be substantially the same position as those of tip surfaces 38a of the internal spline 38. Thus, the lubricant reservoir 52a to be formed by the presence of the toothless portion 44a can be formed to have a size corresponding to those of the tooth flanks where the inner shaft 35 and the outer shaft 36 slide in contact with each other. Accordingly, the lubricating oil G stored in the lubricant reservoir 52a can securely be distributed over the tooth flanks of the internal spline 38.

In the toothless portion forming step S2 for forming the toothless portion 44a, a shaft body 40a including external teeth 41a with no toothless portions 44a is prepared first. The toothless portions 44a are formed by, for example, pressing tip surfaces 42a of the external teeth 41a of the shaft body 40a. At this time, the tip surface 42a of each external tooth 41a is plastically deformed. Thus, a part of the bottom 47a of the toothless portion 44a laterally protrudes from the tooth flanks of the external tooth 41a as the protruding portions 49a.

The part of the bottom 47a of the toothless portion 44a is caught on the resin layer 50a as the protruding portions 49a. Thus, the movement of the resin layer 50a in the axial direction X1 can be restricted. Accordingly, retention on the shaft body 40a can be maintained more securely even in the case of the resin layer 50a formed by injection molding.

### Modified Example 2

In the embodiment described above, description is given of the exemplary case where the toothless portions 44, 45, and 46 are provided in all the tip surfaces 42 of the external teeth 41 so as to be arrayed over the entire circumference of the shaft body. In Modified Example 2, description is given of a case where the toothless portions are provided in at least two tip surfaces of the external teeth.

FIG. 12 is a perspective view schematically illustrating an inner shaft 35b according to Modified Example 2. In FIG. 12, toothless portions 44b and lubricant reservoirs 52b are schematically represented by long dashed double-short dashed lines so that their arrangement positions coincide with each other. As illustrated in FIG. 12, the toothless portions 44b and the lubricant reservoirs 52b are provided in a plurality of lines along a circumferential direction of a shaft body 40b. Specifically, the toothless portions 44b are provided in at least two tip surfaces 42b of external teeth 41b at a plurality of positions spaced away from each other in the axial direction X1 of the shaft body 40b so as to be arrayed in the circumferential direction. The lubricant reservoirs 52b are provided at portions of a resin layer 50b corresponding to all the toothless portions 44b.

In FIG. 12, each array of the toothless portions 44b and the lubricant reservoirs 52b is provided in an area corresponding to a semiperimeter of the shaft body 40b. If a first array is an odd-numbered array and a second array is an even-numbered array from the distal end of the shaft body 40b in the axial direction X1, the second array is located so as not to overlap the first array in the axial direction X1.

As described above, the toothless portions 44b are provided in at least two tip surfaces 42b of the external teeth 41b at a plurality of positions spaced away from each other in the axial direction X1 of the shaft body 40b so as to be arrayed in the circumferential direction. With this structure, the number of processes for forming the toothless portions can be reduced as compared to the case where the toothless portions are formed over the entire circumference. If the first arrays and the second arrays are alternately provided as described above, lubricating oil stored in the lubricant reservoirs 52b can be distributed over the entire circumference of the shaft body 40b.

### Modified Example 3

In the embodiment described above, description is given of the exemplary case where the resin layer 50 is provided on the shaft body 40 of the inner shaft 35. The resin layer may be provided on the outer shaft. In Modified Example 3, description is given of a case where the resin layer is provided on a tubular body of the outer shaft.

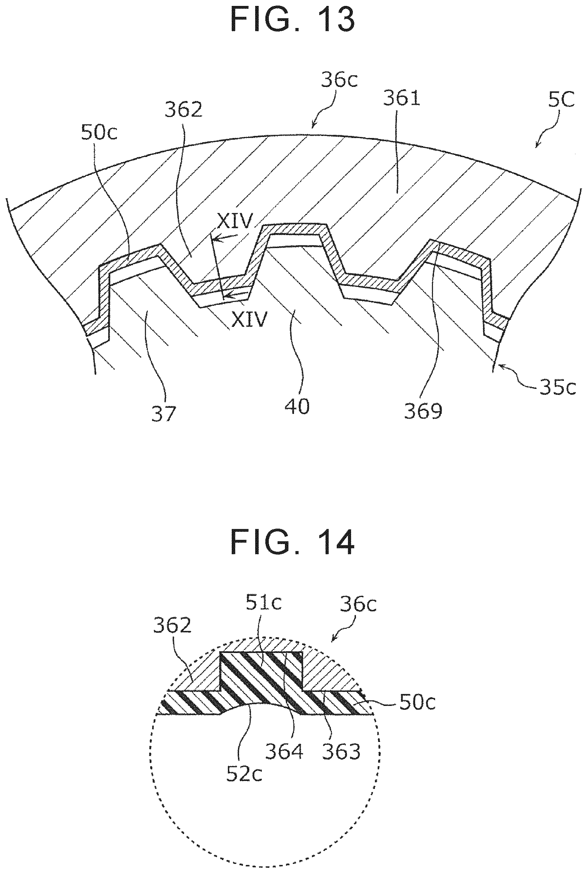

FIG. 13 is a sectional view illustrating the sectional profile of a part of an intermediate shaft 5C according to Modified Example 3. Specifically, FIG. 13 corresponds to FIG. 3. As illustrated in FIG. 13, an inner shaft 35c according to Modified Example 3 does not include the resin layer, and a resin layer 50c is provided on an outer shaft 36c. Specifically, the outer shaft 36c includes a tubular body 361 and the resin layer 50c. The tubular body 361 is a cylindrical body. A plurality of internal teeth 362 extending in the axial direction X1 are formed on the inner peripheral surface of the tubular body 361. The internal teeth 362 are radially provided about an axis center of the tubular body 361.

FIG. 14 is a sectional view illustrating a cutting plane including a line XIV-XIV in FIG. 13. As illustrated in FIG. 14, at least one toothless portion 364 is formed in a tip surface 363 of each of the internal teeth 362.

The resin layer 50c is laminated on an inner peripheral surface 369 of the outer shaft 36c so as to cover the entire inner peripheral surface 369. The resin layer 50c fills the toothless portions 364 provided in the internal teeth 362. Portions of the resin layer 50c that fill the toothless portions 364 are referred to as filling portions 51c. The thickness of the filling portion 51c is larger than those of portions of the resin layer 50c that are laminated on the internal teeth 362. Since the filling portions 51c fill the toothless portions 364, the filling portions 51c are caught on the internal teeth 362 in the toothless portions 364 even if the resin layer 50c may move in the axial direction X1 relative to the tubular body 361. Thus, the movement of the resin layer 50c in the axial direction X1 is restricted, and the resin layer 50c is unlikely to detach from the tubular body 361.

The outer surfaces of the filling portions 51c are provided with lubricant reservoirs 52c recessed as compared to other portions. Specifically, the lubricant reservoirs 52c are provided at positions corresponding to those of the toothless portions 364. For example, a lubricant is stored in the lubricant reservoir 52c. The stored lubricant can increase the slidability of the internal spline 38 relative to the external spline 37.

The outer shaft 36c according to Modified Example 3 can be formed through steps similar to the steps for manufacturing the inner shaft 35 described above (tooth forming step S1, toothless portion forming step S2, resin layer forming step S3, and cooling step S4).

### Others

Although the method for manufacturing the spline telescopic shaft and the spline telescopic shaft according to the present invention are described above based on the embodiment, the present invention is not limited to the embodiment.

For example, in the embodiment described above, description is given of the exemplary case where the shaft body 40 is made of aluminum. The shaft body 40 may be made of other metals.

In the embodiment described above, description is given of the exemplary case where the plurality of toothless portions 44, 45, and 46 are provided in the tip surface 42 of one external tooth 41. It is only necessary that at least one toothless portion be provided in the tip surface 42 of one external tooth 41. In the embodiment described above, description is given of the exemplary case where the toothless portions 44, 45, and 46 are provided in all the tip surfaces 42 of the external teeth 41. It is only necessary that the toothless portions be provided in the tip surface 42 of at least one of the external teeth 41. In any case, the lubricant reservoir is formed at a portion of the resin layer corresponding to the toothless portion.

In the embodiment described above, description is given of the exemplary case where the toothless portions 44, 45, and 46 are formed in the shaft body 40 including the external teeth 41 formed in advance. The external teeth may be formed after recesses serving as the toothless portions are formed in a shaft body including no external teeth.

The present invention encompasses embodiments attained by various modifications conceivable by persons skilled in the art to the embodiment, and embodiments attained by arbitrarily combining the constituent elements and functions of the embodiment and the modified examples without departing from the scope of the claims.

The present invention is applicable to a spline telescopic shaft including an external spline that has a resin layer.

## Claims

1. A method for manufacturing a spline telescopic shaft, the spline telescopic shaft including an inner shaft (35) provided with an external spline (37) on an outer peripheral surface of the inner shaft (35), and an outer shaft (36) provided with an internal spline (38) on an inner peripheral surface of the outer shaft (36) and configured such that the external spline (37) of the inner shaft (35) slides in an axial direction relative to the internal spline (38),
the method comprising:
a toothless portion forming step (S2) of forming a toothless portion in one of an external tooth provided on an outer peripheral surface of a shaft body (40) included in the inner shaft (35) to extend in the axial direction and an internal tooth provided on an inner peripheral surface of a tubular body included in the outer shaft (36) to extend in the axial direction;
a resin layer forming step (S3) of forming a resin layer (50), which covers one of the external tooth and the internal tooth and fills the toothless portion, by arranging one of the shaft body (40) including the toothless portion and the tubular body including the toothless portion in a mold including a cavity and injecting a resin into the cavity, the cavity being included in a flat receiving surface that faces tooth flanks of one of the external tooth of the shaft body (40) including the toothless portion and the internal tooth of the tubular body including the toothless portion;
**characterized by**
a cooling step (S4) of cooling one of the shaft body (40) including the resin layer (50) and the tubular body including the resin layer (50) to form a lubricant reservoir (52) such that a portion of the resin layer (50) corresponding to the toothless portion is recessed as compared to other portions.

2. The method for manufacturing the spline telescopic shaft according to claim 1, **characterized in that**, in the toothless portion forming step (S2), one of the external tooth and the internal tooth is plastically deformed to form the toothless portion and form a protruding portion that protrudes in a lateral direction of the toothless portion.

3. The method for manufacturing the spline telescopic shaft according to claim 1 or 2, **characterized in that** the shaft body (40) is made of aluminum or an aluminum alloy.

4. The method for manufacturing the spline telescopic shaft according to any one of claims 1 to 3, **characterized in that** the lubricant reservoir (52) is formed in the resin layer (50) by forming the toothless portion in the external tooth of the inner shaft (35) in the toothless portion forming step (S2), forming the resin layer (50) on the external tooth of the inner shaft (35) in the resin layer forming step (S3), and cooling the shaft body (40) in the cooling step (S4).

5. A spline telescopic shaft comprising:
an inner shaft (35) provided with an external spline (37) on an outer peripheral surface (35a) of the inner shaft (35); and
an outer shaft (36) provided with an internal spline (38) on an inner peripheral surface of the outer shaft (36) and configured such that the external spline (37) of the inner shaft (35) slides relative to the internal spline (38), wherein
the inner shaft (35) includes a shaft body (40) including an external tooth serving as at least a part of the external spline (37) on the outer peripheral surface (35a), and the outer shaft (36) includes a tubular body including an internal tooth serving as at least a part of the internal spline (38) on the inner peripheral surface, and wherein
one of the shaft body (40) and the tubular body includes a resin layer (50), which covers one of the external tooth and the internal tooth, a toothless portion filled with the resin layer (50) is provided in one of the external tooth covered with the resin layer (50) and the internal tooth covered with the resin layer (50),
**characterized in that** a portion of the resin layer (50) corresponding to the toothless portion is a lubricant reservoir (52) recessed as compared to other portions.

6. The spline telescopic shaft according to claim 5, **characterized in that** one of the inner shaft (35) and the outer shaft (36) is provided with a protruding portion that protrudes in a lateral direction of the toothless portion.

7. The spline telescopic shaft according to claim 5 or 6, **characterized in that** the shaft body (40) is made of aluminum or an aluminum alloy.

8. The spline telescopic shaft according to any one of claims 5 to 7, **characterized in that** the inner shaft (35) includes the resin layer (50), and the toothless portion is provided in the external tooth.

## Patentansprüche

1. Verfahren zum Herstellen einer Zahn-Teleskopwelle, wobei die Zahn-Teleskopwelle eine Innenwelle (35), die mit einer Außenverzahnung (37) an einer Außenumfangsfläche der Innenwelle (35) vorgesehen ist, und eine Außenwelle (36) aufweist, die mit einer Innenverzahnung (38) an einer Innenumfangsfläche der Außenwelle (36) vorgesehen und so konfiguriert ist, dass die Außenverzahnung (37) der Innenwelle (35) in einer Axialrichtung relativ zu der Innenverzahnung (38) gleitet,
wobei das Verfahren aufweist:
einen Zahnloser-Abschnitt-Ausbildungsschritt (S2) zum Ausbilden eines zahnlosen Abschnitts in einem der Zähne, Außenzahn, der an einer Außenumfangsfläche eines Wellenkörpers (40) vorgesehen ist, der in der Innenwelle (35) enthalten ist, um sich in der Axialrichtung zu erstrecken, und Innenzahn, der an einer Innenumfangsfläche eines rohrförmigen Körpers vorgesehen ist, der in der Außenwelle (36) enthalten ist, um sich in der Axialrichtung zu erstrecken;
einen Harzschicht-Ausbildungsschritt (S3) zum Ausbilden einer Harzschicht (50), die einen der Zähne, Außenzahn und Innenzahn, bedeckt und den zahnlosen Abschnitt füllt, durch Anordnen eines der Körper, Wellenkörper (40), der den zahnlosen Abschnitt enthält, und rohrförmiger Körper, der den zahnlosen Abschnitt enthält, in einer Form, die einen Hohlraum enthält, und Einspritzen eines Harzes in den Hohlraum, wobei der Hohlraum in einer flachen Aufnahmefläche enthalten ist, die den Zahnflanken eines der Zähne, Außenzahn des Wellenkörpers (40), der den zahnlosen Abschnitt enthält, und Innenzahn des rohrförmigen Körpers, der den zahnlosen Abschnitt enthält, zugewandt ist;
**gekennzeichnet durch**
einen Kühlschritt (S4) zum Kühlen eines der Körper, Wellenkörper (40), der die Harzschicht (50) enthält, und rohrförmiger Körper, der die Harzschicht (50) enthält, um ein Schmiermittelreservoir (52) auszubilden, so dass ein Abschnitt der Harzschicht (50), der dem zahnlosen Abschnitt entspricht, im Vergleich zu anderen Abschnitten vertieft ist.

2. Verfahren zum Herstellen der Zahn-Teleskopwelle nach Anspruch 1, **dadurch gekennzeichnet, dass** in dem Zahnloser-Abschnitt-Ausbildungsschritt (S2) einer der Zähne, Außenzahn und Innenzahn, plastisch verformt wird, um den zahnlosen Abschnitt auszubilden und einen vorstehenden Abschnitt auszubilden, der in einer seitlichen Richtung des zahnlosen Abschnitts vorsteht.

3. Verfahren zum Herstellen der Zahn-Teleskopwelle nach Anspruch 1 oder 2, **dadurch gekennzeichnet, dass** der Wellenkörper (40) aus Aluminium oder einer Aluminiumlegierung hergestellt ist.

4. Verfahren zum Herstellen der Zahn-Teleskopwelle nach einem der Ansprüche 1 bis 3, **dadurch gekennzeichnet, dass** das Schmiermittelreservoir (52) in der Harzschicht (50) durch Ausbilden des zahnlosen Abschnitts in dem Außenzahn der Innenwelle (35) in dem Zahnloser-Abschnitt-Ausbildungsschritt (S2), Ausbilden der Harzschicht (50) auf dem Außenzahn der Innenwelle (35) in dem Harzschicht-Ausbildungsschritt (S3), und Kühlen des Wellenkörpers (40) in dem Kühlschritt (S4), ausgebildet wird.

5. Zahn-Teleskopwelle mit:
einer Innenwelle (35), die mit einer Außenverzahnung (37) an einer Außenumfangsfläche der Innenwelle (35) vorgesehen ist, und
einer Außenwelle (36), die mit einer Innenverzahnung (38) an einer Innenumfangsfläche der Außenwelle (36) vorgesehen und so konfiguriert ist, dass die Außenverzahnung (37) der Innenwelle (35) relativ zu der Innenverzahnung (38) gleitet, wobei
die Innenwelle (35) einen Wellenkörper (40) aufweist, die einen Außenzahn enthält, der zumindest als ein Teil der Außenverzahnung (37) an der Außenumfangsfläche (35a) dient, und die Außenwelle (36) einen rohrförmigen Körper aufweist, der einen Innenzahn enthält, der zumindest als ein Teil der Innenverzahnung (38) an der Innenumfangsfläche dient, und wobei
zumindest einer der Körper, Wellenkörper (40) und rohrförmiger Körper, eine Harzschicht (50) enthält, die einen der Zähne, Außenzahn und Innenzahn, bedeckt, wobei ein zahnloser Abschnitt, der mit der Harzschicht (50) gefüllt ist, in einem der Zähne, Außenzahn, der mit der Harzschicht (50) bedeckt ist, und Innenzahn, der mit der Harzschicht (50) bedeckt ist, vorgesehen ist,
**dadurch gekennzeichnet, dass** ein Abschnitt der Harzschicht (50), der dem zahnlosen Abschnitt entspricht, ein Schmiermittelreservoir (52) ist, das im Vergleich zu anderen Abschnitten vertieft ist.

6. Zahn-Teleskopwelle nach Anspruch 5, **dadurch gekennzeichnet, dass** eine der Wellen, Innenwelle (35) und Außenwelle (36), mit einem vorstehenden Abschnitt vorgesehen ist, der in einer seitlichen Richtung des zahnlosen Abschnitts vorsteht.

7. Zahn-Teleskopwelle nach Anspruch 5 oder 6, **dadurch gekennzeichnet, dass** der Wellenkörper (40) aus Aluminium oder einer Aluminiumlegierung hergestellt ist.

8. Zahn-Teleskopwelle nach einem der Ansprüche 5 bis 7, **dadurch gekennzeichnet, dass** die Innenwelle (35) die Harzschicht (50) enthält und der zahnlose Abschnitt in dem Außenzahn vorgesehen ist.

## Revendications

1. Procédé de fabrication d'un arbre télescopique cannelé, l'arbre télescopique cannelé incluant un arbre interne (35) muni d'une cannelure extérieure (37) sur une surface périphérique externe de l'arbre interne (35), et un arbre externe (36) muni d'une cannelure intérieure (38) sur une surface périphérique interne de l'arbre externe (36) et configuré de sorte que la cannelure extérieure (37) de l'arbre interne (35) coulisse dans une direction axiale par rapport à la cannelure intérieure (38),
le procédé comprenant :
une étape de formation de portion sans dent (S2) formant une portion sans dent dans une d'une dent extérieure fournie sur une surface périphérique externe d'un corps d'arbre (40) inclus dans l'arbre interne (35) pour s'étendre dans la direction axiale et d'une dent intérieure fournie sur une surface périphérique interne d'un corps tubulaire inclus dans l'arbre externe (36) pour s'étendre dans la direction axiale ;
une étape de formation de couche de résine (S3) formant une couche de résine (50), qui recouvre une de la dent extérieure et de la dent intérieure et remplit la portion sans dent, en disposant un du corps d'arbre (40) incluant la portion sans dent et le corps tubulaire incluant la portion sans dent dans un moule incluant une cavité et en injectant une résine dans la cavité, la cavité étant incluse dans une surface de réception plane qui fait face aux flancs de dent d'une de la dent extérieure du corps d'arbre (40) incluant la portion sans dent et de la dent intérieure du corps tubulaire incluant la portion sans dent ;
**caractérisé par**
une étape de refroidissement (S4) refroidissant un du corps d'arbre (40) incluant la couche de résine (50) et du corps tubulaire incluant la couche de résine (50) pour former un réservoir de lubrifiant (52) de sorte qu'une portion de la couche de résine (50) correspondant à la portion sans dent est en creux en comparaison aux autres portions.

2. Procédé pour la fabrication de l'arbre télescopique cannelé selon la revendication 1, **caractérisé en ce que**, dans l'étape de formation de portion sans dent (S2), une de la dent extérieure et de la dent intérieure est plastiquement déformée pour former la portion sans dent et former une portion en saillie qui fait saillie dans une direction latérale de la portion sans dent.

3. Procédé pour la fabrication de l'arbre télescopique cannelé selon la revendication 1 ou 2, **caractérisé en ce que** le corps d'arbre (40) est constitué d'aluminium ou d'un alliage d'aluminium.

4. Procédé pour la fabrication de l'arbre télescopique cannelé selon l'une quelconque des revendications 1 à 3, **caractérisé en ce que** le réservoir de lubrifiant (52) est formé dans la couche de résine (50) en formant la portion sans dent dans la dent extérieure de l'arbre interne (35) dans l'étape de formation de portion sans dent (S2), en formant la couche de résine (50) sur la dent extérieure de l'arbre interne (35) dans l'étape de formation de couche de résine (S3), et en refroidissant le corps d'arbre (40) dans l'étape de refroidissement (S4).

5. Arbre télescopique cannelé comprenant :
un arbre interne (35) muni d'une cannelure extérieure (37) sur une surface périphérique externe (35a) de l'arbre interne (35) ; et
un arbre externe (36) muni d'une cannelure intérieure (38) sur une surface périphérique interne de l'arbre externe (36) et configuré de sorte que la cannelure extérieure (37) de l'arbre interne (35) coulisse par rapport à la cannelure intérieure (38), dans lequel
l'arbre interne (35) inclut un corps d'arbre (40) incluant une dent extérieure servant comme au moins une partie de la cannelure extérieure (37) sur la surface périphérique externe (35a), et l'arbre externe (36) inclut un corps tubulaire incluant une dent intérieure servant comme au moins une partie de la cannelure intérieure (38) sur la surface périphérique interne, et dans lequel
un du corps d'arbre (40) et du corps tubulaire inclut une couche de résine (50), laquelle recouvre une de la dent extérieure et de la dent intérieure, une portion sans dent remplie avec la couche de résine (50) est fournie dans une de la dent extérieure recouverte avec la couche de résine (50) et de la dent intérieure recouverte avec la couche de résine (50),
**caractérisé en ce qu'**une portion de la couche de résine (50) correspondant à la portion sans dent est un réservoir de lubrifiant (52) en creux en comparaison aux autres portions.

6. Arbre télescopique cannelé selon la revendication 5, **caractérisé en ce qu'**un de l'arbre interne (35) et de l'arbre externe (36) est muni d'une portion en saillie qui fait saillie dans une direction latérale de la portion sans dent.

7. Arbre télescopique cannelé selon la revendication 5 ou 6, **caractérisé en ce que** le corps d'arbre (40) est constitué d'aluminium ou d'un alliage d'aluminium.

8. Arbre télescopique cannelé selon l'une quelconque des revendications 5 à 7, **caractérisé en ce que** l'arbre interne (35) inclut la couche de résine (50), et la portion sans dent est fournie dans la dent extérieure.
